# EUROPEAN PATENT APPLICATION

(11) **EP 2 700 502 A1**
(43) Date of publication of application: **26.02.2014**
(21) Application number: 13181549.0
(22) Date of filing: 23.08.2013
(51) Int. Cl.: B32B 17/10

(54) **Front windshield glass of automobile with sunshine-shielding plate function**

(30) Priority: 24.08.2012 CN 201220421527 U
(71) Applicant: Changchun Sun Windows Technology Co. Ltd, 130103 Changchun Jilin (CN)
(72) Inventor: Yan, Chi, 130022 Changchun (CN)
(74) Representative: Jansen, Cornelis Marinus

(57) **Abstract**

The present invention discloses a front windshield glass of automobile with sunshine-shielding plate function, comprising a lower glass layer, a lower polyvinyl butyral (PVB) layer, a flexible allochroic layers, an upper polyvinyl butyral (PVB) layer, and an upper glass layer consecutively laminated and connected with one another from bottom to top; the periphery of the windshield glass is sealed with a sealant, wherein the flexible allochroic layers are positioned at the upper portion of the front windshield glass of automobile, the light transmittance of which reduces as the intensification of the light increases, thus functions as sunshine-shielding plates and avoids the driver from manual operation. Due to the flexible allochroic layers, which has the same length with that of the front windshield glass of automobile and a width between 10-20 cm are positioned at the upper portion of the front windshield glass of automobile, and the remaining portions of the front windshield glass of automobile are still transparent glass, the view of the driver would not be affected. The flexible allochroic layer is applicable to the production of curved front windshield glass having certain radian. The technical solution is completely compatible with the current production techniques, without increasing additional cost.

## Description

### TECHNICAL FIELD

The present invention relates to a front windshield glass of automobile with sunshine-shielding plate function.

### BACKGROUND OF THE INVENTION

During automobile-driving, the oncoming strong light may temporarily dazzle the driver, and bring safety problem to the moving vehicle. To solve the above problem, a sunshine-shielding plate is usually mounted to the top of the driver's seat to protect the driver from the interference of the strong light. In practice, manual adjustment of the sunshine-shielding plate is required according to the change of sun light, which is very inconvenient.

The Chinese patent application CN1034526A provides a kind of photochromic glass, having a reduced light transmittance with the increased intensification of the light.

The Chinese patent application CN102603204A provides an application of using photochromic glass as skylight glass or side window glass of the automobile. However, as the front windshield glass of automobile requires sufficient transparency, only the upper portion of the front windshield glass could be made up of photochromic glass to function as sunshine-shielding plate, and other portions remain using transparent glass, which would not affect the view of the driver. Such combination of two types of glass brings considerable difficulty to the production process.

The Chinese patent application CN2710948Y discloses a photochromic glass with sandwiched structure having a liquid crystal glass interlayer, which can solve the above problem. Most of the current front windshield glass is a curved surface with certain radian, thus, it requires high-temperature molding. The rigid liquid crystal glass would be damaged during the hot-bending process.

Thus, there is still a need to provide a front windshield glass of automobile with sunshine-shielding plate function which can meet above requirements.

### SUMMARY OF THE INVENTION

For solving the defects existing in the prior art, the present invention provides a front windshield glass of automobile with sunshine-shielding plate function.

As one aspect, the present invention provides a front windshield glass of automobile with sunshine-shielding plate function, wherein the first structure thereof comprises a lower glass layer, a lower polyvinyl butyral (PVB) layer, a flexible photochromic layer, an upper polyvinyl butyral (PVB) layer, and an upper glass layer consecutively laminated from bottom to top; the periphery of the windshield glass is sealed with sealant.

The flexible photochromic layer is produced by mixing a photochromic material with a flexible glass raw material or flexible transparent plastics, and then manufacturing into the flexible photochromic layer; or by coating a photochromic material on one or both sides of a flexible transparent glass or plastics to form a flexible photochromic layer; uniform or gradient allochroic effect can be achieved under the exposure of strong light, depending on different thicknesses of the photochromic materials. The flexible substrate photochromic layer can be produced by using the technology of the Chinese patent application CN202147451U and can be made into arc-shape surface.

As another aspect, the present invention provides a front windshield glass of automobile with sunshine-shielding plate function, wherein the second structure thereof comprises a lower glass layer, a lower polyvinyl butyral (PVB) layer, a flexible electrochromic layer, an upper polyvinyl butyral (PVB) layer, and an upper glass layer consecutively laminated from bottom to top; the flexible electrochromic layer has joint(s) connected to an electro-optical sensor system and a vehicle-mounted circuit; the periphery of the windshield glass is sealed with sealant;

The flexible electrochromic layer comprises a flexible transparent and conductive glass or plastics, an ionic conducting layer, an ionic supplying layer, an electrochromic material layer, an ionic supplying layer, an ionic conducting layer, and a flexible transparent and conductive glass or plastics consecutively from bottom to top. The flexible substrate electrochromic layer can be produced by using the technology of the Chinese patent application CN1326561A and can be made into arc-shape surface.

Uniform or gradient allochroic effect can be achieved under the exposure of strong light, depending on different thicknesses of the photochromic materials. The electro-optical sensor system controls, by sensing the change of the strength of light on the outside, the light transmittance of the flexible electrochromic layer via the vehicle-mounted circuit.

The flexible allochroic layers of the above two structures are positioned at the upper portion of the front windshield glass of automobile, having the same length with that of the front windshield glass of automobile, and a width between 10-20 cm.

As a yet another aspect, the present invention provides an automobile comprising the front windshield glass of automobile with sunshine-shielding plate function.

Unless otherwise indicated, the term "flexible photochromic layer" or "flexible electrochromic layer" means a layer which can generate deformation such as bend, distortion, etc. which would not disrupt the structure and performance of the layer per se, under the action of external force less than a critical value, and can partly or completely restore to the state prior to the appliance of the external force, after withdrawing the external force. When the external force exceeds the critical value, the structure and performance of the layer are disrupted. The layers of different materials correspond to different critical values.

### BRIEF DESCRIPTION OF THE FIGURES

FIG. 1 is a schematic view of the structure of the first kind of a front windshield glass of automobile with sunshine-shielding plate function provided in the present invention.

FIG. 2 is a schematic view of the structure of the second kind of a front windshield glass of automobile with sunshine-shielding plate function provided in the present invention.

FIG. 3 is the positional schematic view of the flexible allochroic layer 10 in the front windshield glass of automobile with sunshine-shielding plate function provided in the present invention.

### DETAILED DESCRIPTION OF THE INVENTION

The present invention provides a method for manufacturing the front windshield glass of automobile with sunshine-shielding plate function of the first structure, and the specific steps and conditions are as follows:
(1). softening the upper and lower glass layers upon heating, followed by using mold to process them into required shape,
(2). adhering the lower PVB layer onto the convex outer surface of the shaped lower glass layer and adhering the upper PVB layer onto the concave inner surface of the shaped upper glass layer respectively;
(3). positioning the flexible allochroic layers, having the same length with that of the front windshield glass of automobile, and a width between 10-20 cm, at the upper portion of the front windshield glass of automobile; positioning the flexible photochromic layer on the lower glass layer adhered to the lower PVB layer and contacting with the lower PVB layer, and positioning the upper glass layer adhered to the upper PVB layer on the flexible photochromic layer, with the upper PVB layer contacting with the flexible photochromic layer, thus obtaining a prototype of the front windshield glass of automobile with sunshine-shielding plate function;
(4) pre-curing the prototype of the front windshield glass of automobile with sunshine-shielding plate function obtained from step (3) in a vacuum of no more than 100Pa, at 140-160 °C, and then maintaining the temperature for 2-4 hours till completely cured;
(5) optionally, for preventing water and dust, sealing around the periphery of the cured prototype of front windshield glass of automobile with sunshine-shielding plate function with sealing materials, to obtain the target article.

The present invention provides a method for manufacturing the front windshield glass of automobile with sunshine-shielding plate function of the second structure, and the specific steps and conditions are as follows:
(1). softening the upper and lower glass layers upon heating, followed by using mould to process them into required shape;
(2). adhering the lower PVB layer onto the convex outer surface of the shaped lower glass layer and adhering the upper PVB layer onto the concave inner surface of the shaped upper glass layer, respectively;
(3). positioning the flexible allochroic layers, having the same length with that of the front windshield glass of automobile, and a width between 10-20 cm, at the upper portion of the front windshield glass of the automobile; positioning the flexible electrochromic layer on the lower glass layer adhered to the lower PVB layer and contacting with the lower PVB layer, and positioning the upper glass layer adhered to the upper PVB layer on the flexible electrochromic layer, with the upper PVB layer contacting with the flexible electrochromic layer, thus obtaining a prototype of the front windshield glass of automobile with sunshine-shielding plate function; wherein joints produced by screen printing are provided on the flexible electrochromic layer and connected to an electro-optical sensor system and a vehicle-mounted circuit;
(4) pre-curing the prototype of the front windshield glass of automobile with sunshine-shielding plate function obtained from step (3) in a vacuum of no more than 100Pa, at 140-160 °C, and then maintaining the temperature for 2-4 hours till completely cured;
(5) optionally, for preventing water and dust, sealing around the periphery of the cured prototype of the front windshield glass of automobile with sunshine-shielding plate function with sealing materials, to obtain the target article.

The present invention provides a front windshield glass of automobile with sunshine-shielding plate function. By adding a flexible allochroic layer at the upper portion of the front windshield glass of automobile, the transparency thereof may be automatically changed according to the light strength, so as to function as a sunshine-shielding plate. Meanwhile, the avoidance of manual operation by the driver provides convenience for the driver. The flexible allochroic layer is positioned at the upper portion of the front windshield glass of automobile, having the same length with that of the front windshield glass of automobile, and a width between 10-20 cm, and the rest of the glass remains transparent glass that will not affect the view of the driver.

The flexible allochroic layer is applicable to the production of curved front windshield glass of certain radian. The technical solution is completely compatible with the current production techniques, without increasing additional cost.

### Examples

### Example 1

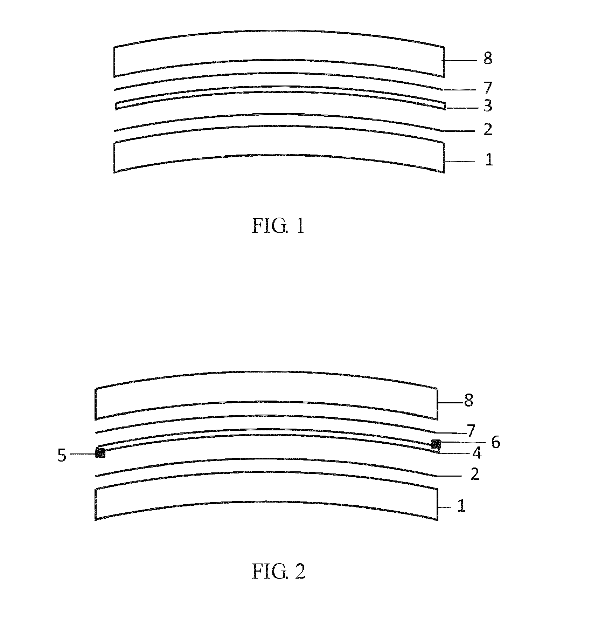

As shown in FIG. 1, the present invention provides the first structure of a front windshield glass of automobile with sunshine-shielding plate function, comprising a lower glass layer 1, a lower PVB layer 2, a flexible photochromic layer 3, an upper PVB layer 7, and an upper glass layer 8 consecutively laminated from bottom to top; the periphery of the windshield glass is sealed with sealant; the flexible photochromic layer 3 is positioned at the upper portion of the windshield glass, having the same length with that of the windshield glass, and a width between 10-20 cm.

The specific steps and conditions of the production method are as follows:
(1). softening the upper glass layer 8 and lower glass layer 1 upon heating, followed by using mold to process them into required shape,
(2). adhering the lower PVB layer 2 onto the convex outer surface of the shaped lower glass layer 1 and adhering the upper PVB layer 7 onto the concave inner surface of the shaped upper glass layer 8 respectively;
(3). positioning the flexible photochromic layer 3, on the lower glass layer 1 adhered to the lower PVB layer 2 and contacting with the lower PVB layer 2, and positioning the upper glass layer 8 adhered to the upper PVB layer 7 on the flexible photochromic layer 3, with the upper PVB layer 7 contacting with the flexible photochromic layer 3, thus obtaining a prototype of the front windshield glass of automobile with sunshine-shielding plate function;
(4). pre-curing the prototype of the front windshield glass of automobile with sunshine-shielding plate function obtained from step (3) in a vacuum of no more than 100Pa, at 140-160 °C, and then maintaining the temperature for 2-4 hours till completely cured, to obtain the front windshield glass of automobile with sunshine-shielding plate function;
(5). for preventing water and dust, sealing around the periphery of the cured prototype of the front windshield glass of automobile with sunshine-shielding plate function with sealing materials, to obtain the target article.

### Example 2

As shown in FIG. 2, the present invention provides the second structure of a front windshield glass of automobile with sunshine-shielding plate function, comprising a lower glass layer 1, a lower PVB layer 2, a flexible electrochromic layer 4, an upper PVB layer 7, and an upper glass layer 8 consecutively laminated from bottom to top; the flexible electrochromic layer has joints 5 and 6 connected to electro-optical sensor system and vehicle-mounted circuit; the periphery of the windshield glass is sealed with sealant; the flexible electrochromic layer 4 is positioned at the upper portion of the windshield glass, having the same length with that of the windshield glass, and a width between 10-20 cm.

The specific steps and conditions of the production method are as follows:
(1). softening the upper glass layer 8 and lower glass layer 1 upon heating, followed by using mold to process them into required shape,
(2). adhering the lower PVB layer 2 onto the convex outer surface of the shaped lower glass layer 1 and adhering the upper PVB layer 7 onto the concave inner surface of the shaped upper glass layer 8 respectively;
(3). positioning the flexible electrochromic layer 4 on the lower glass layer 1 adhered to the lower PVB layer 2 and contacting with the lower PVB layer2 , and positioning the upper glass layer 8 adhered to the upper PVB layer 7 on the flexible electrochromic layer 4, with the upper PVB layer 7 contacting with the flexible electrochromic layer 4, thus obtaining a prototype of the front windshield glass of automobile with sunshine-shielding plate function; wherein joints 5 and 6 are formed by screen printing on the flexible electrochromic layer and the joints are connected to an electro-optical sensor system and a vehicle-mounted circuit;
(4). pre-curing the prototype of the front windshield glass of automobile with sunshine-shielding plate function obtained from step (3) in a vacuum of no more than 100Pa, at 140-160 °C, and then maintaining the temperature for 2-4 hours till completely cured;
(5). for preventing water and dust, sealing around the periphery of the cured prototype of the front windshield glass with sunshine-shielding plate function with sealing materials, to obtain the target article.

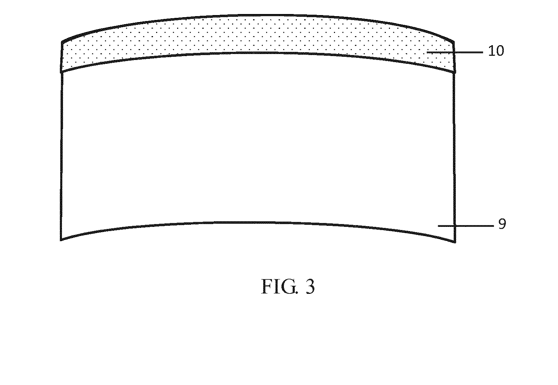

FIG. 3 shows the positional schematic view of the flexible allochroic layer 10 in the front windshield glass of automobile with sunshine-shielding plate function as provided in the present invention. The flexible allochroic layer 10 comprises the flexible photochromic layer 3 and the flexible electrochromic layer 4.

In the above detailed description, reference is made to the accompanying drawings, which form a part thereof. In the drawings, similar symbols typically identify similar components, unless context dictates otherwise. The illustrative embodiments described in the detailed description, drawings, and claims are not meant to be limiting. Other embodiments may be used, and other changes may be made, without departing from the spirit or scope of the subject matter presented herein. It will be readily understood that the aspects of the present disclosure, as generally described herein, and illustrated in the Figures, can be arranged, substituted, combined, separated, and designed in a wide variety of different configurations, all of which are explicitly contemplated herein.

The present disclosure is not to be limited in terms of the particular embodiments described in this application, which are intended as illustrations of various aspects. Many modifications and variations can be made without departing from its spirit and scope, as will be apparent to those skilled in the art. Functionally equivalent methods and apparatuses within the scope of the disclosure, in addition to those enumerated herein, will be apparent to those skilled in the art from the foregoing descriptions. Such modifications and variations are intended to fall within the scope of the appended claims. The present disclosure is to be limited only by the terms of the appended claims, along with the full scope of equivalents to which such claims are entitled. It is also to be understood that the terminology used herein is for the purpose of describing particular embodiments only, and is not intended to be limiting.

As used in this document, the singular forms "a", "an" and "the" include plural references unless the context clearly dictates otherwise. Unless defined otherwise, all technical and scientific terms used herein have the same meanings as commonly understood by one of ordinary skill in the art. Nothing in this disclosure is to be construed as an admission that the embodiments described in this disclosure are not entitled to antedate such disclosure by virtue of prior invention. As used in this document, the term "comprising" means "including, but not limited to", and can be used interchangeably with "including" or "containing".

While the method and device are described in terms of "comprising" various components or steps (interpreted as meaning "including, but not limited to"), the method, and device can also "consist essentially of" or "consist of" the various components and steps, and such terminology should be interpreted as defining essentially closed-member groups.

Various of the above-disclosed and other features and functions, or alternatives thereof, may be combined into many other different systems or applications. Various presently unforeseen or unanticipated alternatives, modifications, variations or improvements therein may be subsequently made by those skilled in the art, each of which is also intended to be encompassed by the disclosed embodiments.

## Claims

1. A glass with sunshine-shielding plate function, comprising a lower glass layer (1), a lower polyvinyl butyral layer (2), a flexible photochromic layer (3), an upper polyvinyl butyral layer (7), and an upper glass layer (8) consecutively laminated and connected with one another from bottom to top; the periphery of the windshield glass being sealed with a sealant.

2. The glass according to claim 1, wherein the flexible photochromic layer is produced by mixing a photochromic material with a flexible glass raw material or flexible transparent plastic and then forming the resulting mixture into the flexible photochromic layer; or by coating a photochromic material on one or both sides of a flexible transparent glass or plastics to form a flexible photochromic layer.

3. The glass according to claim 1, wherein the flexible photochromic layer has an arc-shape surface.

4. The glass according to claim 1, wherein the flexible photochromic layer is positioned at the upper portion of the glass.

5. A glass with sunshine-shielding plate function, comprising a lower glass layer (1), a lower polyvinyl butyral layer (2), a flexible electrochromic layer (4), an upper polyvinyl butyral layer (7), and an upper glass layer (8) consecutively laminated and connected with one another from bottom to top; the flexible electrochromic layer (4) having joints (5) and (6) connected to an electro-optical sensor system and a vehicle-mounted circuit; the periphery of the windshield glass being sealed with a sealant.

6. The glass according to claim 5, wherein the flexible electrochromic layer comprises a flexible transparent and conductive glass or plastics, an ionic conducting layer, an ionic supplying layer, an electrochromic material layer, an ionic supplying layer, an ionic conducting layer, and a flexible transparent and conductive glass or plastics consecutively from bottom to top.

7. The glass according to claim 5, wherein the electro-optical sensor system controls, by sensing the change of the strength of light on the outside, the light transmittance of the flexible electrochromic layer via the vehicle-mounted circuit.

8. The glass according to claim 5, wherein the flexible photochromic layer is positioned at the upper portion of the glass.

9. The glass according to claim 1 or 5, wherein the glass is a front windshield glass of automobile.

10. An automobile comprising the glass with sunshine-shielding plate function according to any one of claims 1-9.
